# EUROPEAN PATENT APPLICATION

(11) **EP 4 787 932 A1**
(43) Date of publication of application: **05.08.2026**
(21) Application number: 24872975.8
(22) Date of filing: 26.09.2024
(51) Int. Cl.: H04W 24/04, H02J 50/00, H02J 50/20, H04W 72/044, H04W 72/541

(54) **APPARATUS AND METHOD FOR SUPPORTING ENERGY HARVESTING IN WIRELESS COMMUNICATION SYSTEM**

(30) Priority: 26.09.2023 US 202363540650 P
(71) Applicant: LG Electronics Inc., Seoul 07336 (KR)
(72) Inventor: KIM, Jaehyung, Seoul 06772 (KR); YANG, Suckchel, Seoul 06772 (KR); KIM, Seonwook, Seoul 06772 (KR); LEE, Youngdae, Seoul 06772 (KR); AHN, Joonkui, Seoul 06772 (KR); HWANG, Seunggye, Seoul 06772 (KR)
(74) Representative: Plasseraud IP
(86) International application number: PCT/KR2024/014614
(87) International publication number: WO 2025/071267

(57) **Abstract**

According to various embodiments of the present disclosure, there is provided a method performed by a first device, the method comprising receiving a first energizing signal (ES) from a second device, receiving a multiplexed second ES and a first link signal from the second device, and transmitting a second link signal to the second device. The second ES, the first link signal, and the second link signal are time-multiplexed or frequency-multiplexed. The first ES is an unmodulated carrier wave (CW) for backscatter modulation and energy transfer, and the second ES is a modulated CW or an unmodulated CW. The first ES and the second ES are related to energy transfer to the first device. A reception time of the first ES is earlier than a reception time of the second ES and the first link signal by a time interval of X1. The reception time of the first ES is earlier than a transmission time of the second link signal by a time interval of X2.

## Description

### [Technical Field]

The present disclosure relates to a wireless communication system. More particularly, the present disclosure relates to a device and method for supporting energy harvesting in a wireless communication system.

### [Background Art]

Wireless communication systems are widely deployed to provide various types of communication services, such as voice and data. In general, the wireless communication system is a multiple access system capable of supporting communication with multiple users by sharing available system resources (bandwidth, transmission power, etc.). Examples of the multiple access system include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

### [Disclosure]

### [Technical Problem]

In order to solve the above-described problems, the present disclosure provides a device and method for supporting energy harvesting in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

According to various embodiments of the present disclosure, there is provided a method performed by a first device, the method comprising receiving a first energizing signal (ES) from a second device, receiving a multiplexed second ES and a first link signal from the second device, and transmitting a second link signal to the second device. The second ES, the first link signal, and the second link signal are time-multiplexed or frequency-multiplexed. The first ES is an unmodulated carrier wave (CW) for backscatter modulation and energy transfer, and the second ES is a modulated CW or an unmodulated CW. The first ES and the second ES are related to an energy transfer to the first device. A reception time of the first ES is earlier than a reception time of the second ES and the first link signal by a time interval of X1, and the reception time of the first ES is earlier than a transmission time of the second link signal by a time interval of X2.

According to various embodiments of the present disclosure, there is provided a method performed by a second device, the method comprising transmitting a first energizing signal (ES) to a first device, transmitting a multiplexed second ES and a first link signal to the first device, and receiving a second link signal from the first device. The second ES, the first link signal, and the second link signal are time-multiplexed or frequency-multiplexed. The first ES is an unmodulated carrier wave (CW) for backscatter modulation and energy transfer, and the second ES is a modulated CW or an unmodulated CW. The first ES and the second ES are related to an energy transfer to the first device. A transmission time of the first ES is earlier than a transmission time of the second ES and the first link signal by a time interval of X1, and the transmission time of the first ES is earlier than a reception time of the second link signal by a time interval of X2.

According to various embodiments of the present disclosure, there is provided a first device, the first device comprising a transceiver, at least one processor, and at least one memory operably connectable to the at least one processor and storing instructions performing operations based on being executed by the at least one processor, and the operations comprise all steps of a method performed by the first device according to various embodiments of the present disclosure.

According to various embodiments of the present disclosure, there is provided a second device, the second device comprising a transceiver, at least one processor, and at least one memory operably connectable to the at least one processor and storing instructions performing operations based on being executed by the at least one processor, and the operations comprise all steps of a method performed by the second device according to various embodiments of the present disclosure.

According to various embodiments of the present disclosure, there is provided a control device controlling a first device in a wireless communication system, the control device comprising at least one processor and at least one memory operably connected to the at least one processor, and the at least one memory stores instructions performing operations based on being executed by the at least one processor, and the operations comprise all steps of a method performed by the first device according to various embodiments of the present disclosure.

According to various embodiments of the present disclosure, there is provided a control device controlling a second device in a wireless communication system, the control device comprising at least one processor and at least one memory operably connected to the at least one processor, and the at least one memory stores instructions performing operations based on being executed by the at least one processor, and the operations comprise all steps of a method performed by the second device according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method performed by the first device according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method performed by the second device according to various embodiments of the present disclosure.

### [Advantageous Effects]

In order to solve the above-described problems, the present disclosure can provide a device and method for supporting energy harvesting in a wireless communication system.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates physical channels used in a system applicable to the present disclosure and an example of a general signal transmission method using the physical channels.
FIG. 2 illustrates an example of a structure of a radio frame used in a system applicable to the present disclosure.
FIG. 3 illustrates an example of a slot structure used in a system applicable to the present disclosure.
FIG. 4 illustrates an example of a slot structure of a radio frame used in a system applicable to the present disclosure.
FIG. 5 illustrates an example of an FDM ES transmission method in an NR licensed FDD band in a system applicable to the present disclosure.
FIG. 6 illustrates an example of an FDM ES transmission method in an NR licensed FDD band in a system applicable to the present disclosure.
FIG. 7 illustrates an example of an FDM ES transmission method in an NR licensed FDD band in a system applicable to the present disclosure.
FIG. 8 illustrates an example of an FDM continuous ES transmission method in an NR licensed FDD band in a system applicable to the present disclosure.
FIG. 9 illustrates an example of an FDM discontinuous ES transmission method in an NR licensed FDD band in a system applicable to the present disclosure.
FIG. 10 illustrates an example of an FDM discontinuous ES transmission method in an NR licensed FDD band in a system applicable to the present disclosure.
FIG. 11 illustrates an example of an FDM discontinuous ES transmission method in an NR licensed FDD band in a system applicable to the present disclosure.
FIG. 12 illustrates an example of a TDM ES transmission method in an NR licensed FDD band in a system applicable to the present disclosure.
FIG. 13 illustrates an example of a TDM ES transmission method in an NR licensed FDD band in a system applicable to the present disclosure.
FIG. 14 illustrates an example of a TDM ES transmission method in an NR licensed FDD band in a system applicable to the present disclosure.
FIG. 15 illustrates an example of a TDM ES transmission method in an NR licensed FDD band in a system applicable to the present disclosure.
FIG. 16 illustrates an example of a TDM ES transmission method in an NR licensed FDD band in a system applicable to the present disclosure.
FIG. 17 illustrates an example of a TDM ES transmission method in an NR licensed FDD band in a system applicable to the present disclosure.
FIG. 18 illustrates an example of a device-specific ES resource configuration method in a system applicable to the present disclosure.
FIG. 19 illustrates an example of a device-specific ES resource configuration method in a system applicable to the present disclosure.
FIG. 20 illustrates an example of a device-common ES resource configuration method in a system applicable to the present disclosure.
FIG. 21 illustrates an example of an operation process of a first device in a system applicable to the present disclosure.
FIG. 22 illustrates an example of an operation process of a second device in a system applicable to the present disclosure.
FIG. 23 illustrates an example of a structure of a first device and a second device in a system applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

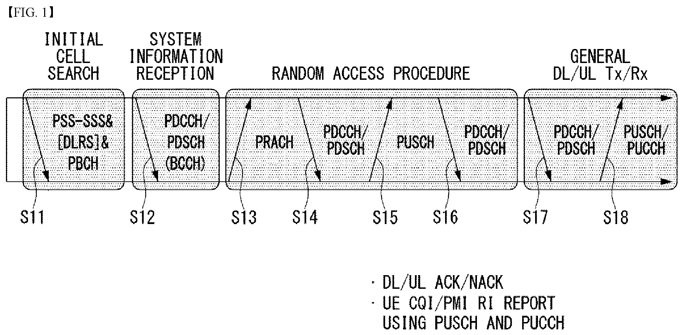

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

### Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

### Radio Frame Structure

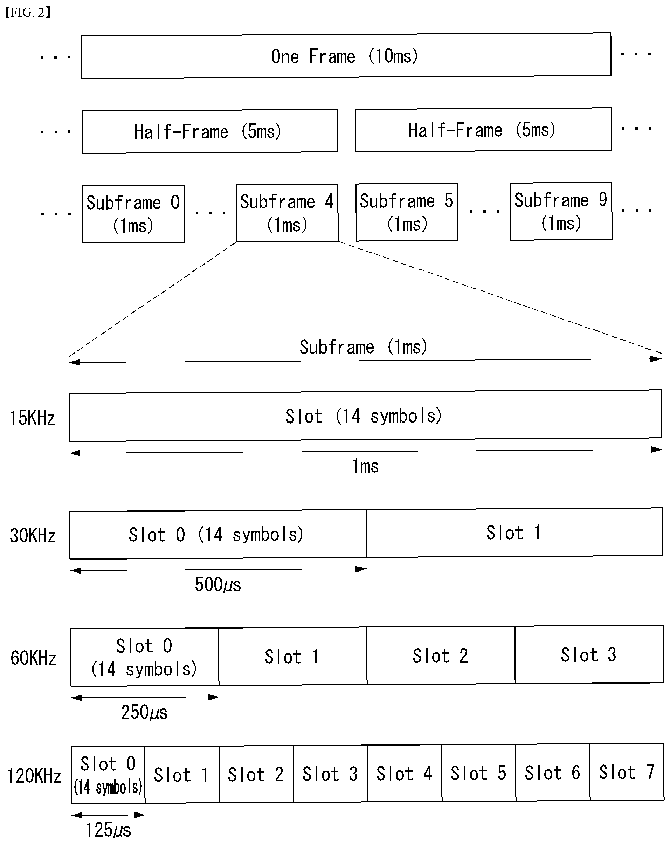

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

N^{slot}_{symb} is the number of symbols in the slot. N^{frame,u}ₛₗₒₜ is the number of slots in the frame. N^{subframe,u}ₛₗₒₜ is the number of slots in the subframe.

Table 2 shows that when the extended CP is used, the number of symbols per slot, the number of slots per frame, and the number of slots per subframe vary depending on the SCS.

**[Table 21**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

**[Table 3]**

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

**[Table 4]**

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

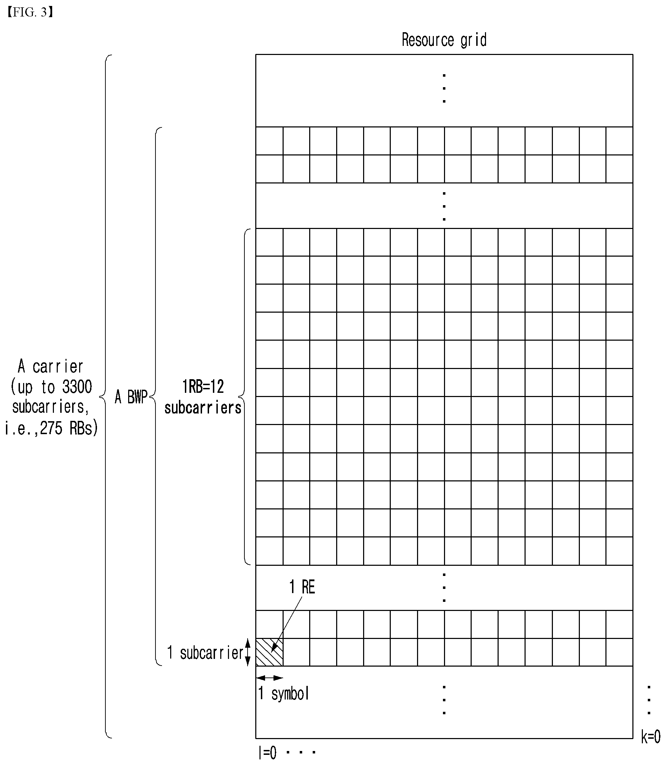

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

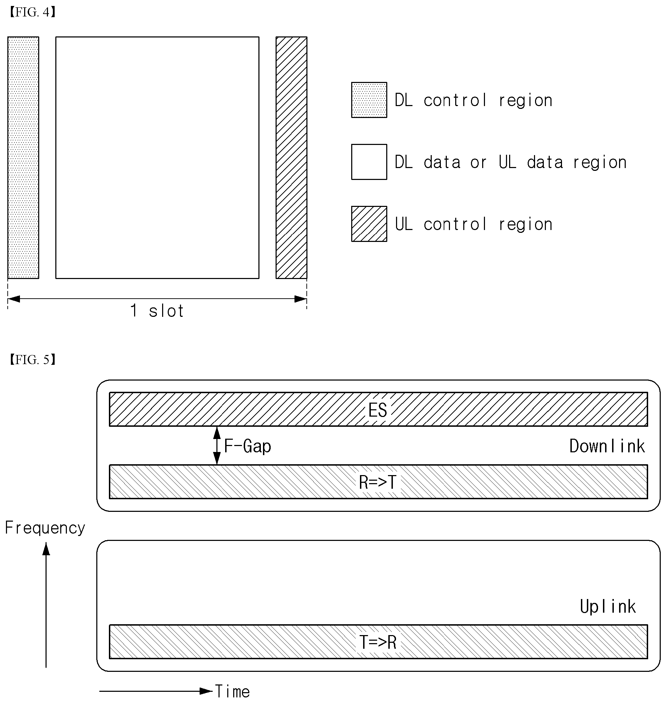

FIG. 4 illustrates an example of a slot structure of a radio frame used in a system applicable to the present disclosure.

FIG. 4 illustrates an example of a slot structure of a frame of an NR system as an example of a system.

As illustrated in an example of FIG. 4, a frame structure of NR is characterized by a self-contained structure in which DL control channel, DL or UL data, and UL control channel can all be included in a slot unit. In this instance, DL data scheduling information, UL data scheduling information, etc. may be transmitted on the DL control channel, and ACK/NACK information for DL data, CSI information (modulation and coding scheme information, MIMO transmission-related information, etc.), scheduling request, etc. may be transmitted on the UL control channel. In FIG. 4, a time gap for DL-to-UL or UL-to-DL switching may exist between a control region and a data region. In addition, some of DL control/DL data/UL data/UL control may not be configured in a slot. Or, the order of each channel configuring a slot may vary (e.g., DL control/DL data/UL control/UL data or UL control/UL data/DL control/DL data, etc.).

### Technical terms used in the present disclosure

- SSB: Synchronization Signal Block
- MIB: Master Information Block
- RMSI: Remaining Minimum System Information
- FR1: Frequency Range 1. It refers to a frequency domain less than or equal to 6 GHz (e.g., 450 MHz to 6,000 MHz).
- FR2: Frequency Range 2. It refers to a millimeter wave (mmWave) domain greater than or equal to 24 GHz (e.g., 24,250 MHz to 52,600 MHz).
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc. necessary for cell access of an NR UE.
- CORESET (COntrol REsource SET): Time/frequency resource in which an NR UE attempts candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated in a separate TB from SIB1 and is transmitted on a separate PDSCH.
- CORESET#0-R: CORESET#0 for reduced capability NR devices
- Type0-PDCCH-R CSS set: a search space set in which an redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): It refers to SSB that has been deployed on NR sync raster but does not include RMSI scheduling information of a corresponding cell for measurement. But, the SSB can include information informing a location of cell defining SSB.
- SCS: subcarrier spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Redcap device or cell supporting only service
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If a separate RO for normal UE 2-step RACH is configured, it is distinguished into RO-N1(4-step) and RO-N2(2-step).
- RO-R: RACH Occasion (RO) configured for redcap UE 4-step RACH and 2-step RACH (if configured) separately from RO-N
- RO-R1, RO-R2: If a separate RO for redcap UE 2-step RACH is configured, it is distinguished into RO-R1(4-step) and RO-R2(2-step).
- PG-R: MsgA-Preambles Group for redcap UEs
- RAR: Random Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication
- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception
- RRC: Radio Resource Control
- RRM: Radio Resource Management
- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing
- FDM: Frequency Division Multiplexing
- DMRS: DeModulation Reference Signal
- TDD: Time Division Duplex
- PCI: Physical layer Cell ID
- EH: Energy Harvesting
- EH device: Device that operates based on EH. It can include all of Device A/B/C under discussion in 3GPP. Also, although the present disclosure mainly considers RF EH, the EH device does not necessarily have to be RF EH-based.
- ES: Energizing Signal (RF signal for energy transfer to support RF energy harvesting)
- ET: Energy Transfer
- CW: Carrier Wave (carrier wave for backscattering modulation). Not semantically limited to single-tone or continuous wave. Includes the meaning of a signal/channel defined/configured for a backscatter device to perform backscatter modulation.
- R: Reader/interrogator. RFID standard term. In the 3GPP Ambient IoT context, the reader may be gNB/eNB, intermediate/assisting node, and UE based on the topology. In addition, since Ambient IoT is not limited to the 4G/5G communication systems, it can include base station, intermediate/assisting node, and UE of next-generation communication systems.
- T: Tag/ambient IoT device. RFID standard term. In the present disclosure, it can be interchanged with EH device, and in the 3GPP Ambient IoT context, it mainly refers to Ambient IoT device and Device A/B/C.
- R→T: Reader-to-Tag or Reader-to-Tag communication link. It can have the same meaning as DL when the base station or the intermediate/assisting node is the reader.
- T→R: Tag-to-Reader or Tag-to-Reader communication link. It can have the same meaning as UL when the base station or the intermediate/assisting node is the reader.
- R↔T: Including R→T and T→R, or R→T or T→R. It can correspond to both R→T and T→R.
- BS: Base Station
- UE: User Equipment. The UE in the LTE, NR, or next-generation communication system refers to LTE, NR, or next-generation communication system UE/terminal, respectively. The UE is a general wireless communication terminal form that is distinguished from Ambient IoT device or Device A/B/C.
- Device: Unless otherwise stated, it refers to EH device, Ambient IoT device, or Device A/B/C indiscriminately.
- F-gap: Frequency gap
- T-gap: Time gap
- TD: Time Domain
- FD: Frequency Domain
- PEI: Paging Early Indication
- LP-WUS: Low-Power Wake-Up Signal
- LP-SS: Low-Power Synchronization Signal

### Composition and Method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents.

Recently, the 5G Internet of Things (IoT) has attracted much attention in the wireless communications world. The 5G IoT can be applied to various application fields by reducing the size, complexity, and power consumption of IoT devices and installing and connecting hundreds of billions to trillions of IoT devices. Specifically, 3GPP SA1 is discussing use cases, scenarios, KPI, etc. for the IoT devices, and these are captured in 3GPP TR 22.840. In addition, 3GPP RAN is conducting a study on IoT communication using the following SID objectives, and the output of the study is captured in 3GPP TR 38.848.

This study targets at a new 3GPP IoT technology, suitable for deployment in a 3GPP system, which relies on ultra-low complexity devices with ultra-low power consumption for the very-low end IoT applications. The study shall provide clear differentiation, i.e., addressing use cases and scenarios that cannot otherwise be fulfilled based on existing 3GPP LPWA IoT technology, e.g., NB-IoT including with reduced peak Tx power.

In terms of energy storage, the study will consider the following device characteristics:
- Pure batteryless devices with no energy storage capability at all, and completely dependent on the availability of an external source of energy)
- Devices with limited energy storage capability that do not need to be replaced or recharged manually.

Device categorization based on corresponding characteristics (e.g., energy source, energy storage capability, passive/active transmission, etc.) may be discussed during the study, in relation with the relevant use cases. The device's peak power consumption shall be limited by its practical form factor for the intended use cases, and shall consider its energy source.
- Identify the suitable deployment scenarios and their characteristics, at least for the use cases/services agreed in SA1's "Study on Ambient power-enabled internet of Things", comprising among at least the following aspects
- Indoor/outdoor environment
- Base station characteristics, e.g., macro/micro/pico cells-based deployments
- Connectivity topologies, including which node(s), e.g., base station, UE, relay, repeater, etc. can communicate with target devices)
- TDD/FDD, and frequency bands in licensed or unlicensed spectrum
- Coexistence with UEs and infrastructure in frequency bands for existing 3GPP technologies
- Device originated and/or device terminated traffic assumption

NOTE: There can be more than one deployment scenario identified for a use case, and a deployment scenario may be common to more than one use case.

NOTE: Where more than one deployment scenario is identified for a use case, the trade-offs between them should also be studied.

NOTE: The study shall not prioritize deployment aspects that should be coordinated with SA, e.g., public or private network, with or without CN connection.)

NOTE: A representative use case can be studied for a group of use cases that have similar requirements.
- Formulate a set of RAN design targets based on the identified deployment scenarios and their characteristics for the relevant use cases, at least including:
- Power consumption
- Complexity
- Coverage
- Data rate
- Positioning accuracy

NOTE: The requirements from SA1 on the relevant use cases shall be taken into consideration.

NOTE: The study shall aim to provide better coverage compared to existing non-3GPP technologies for the relevant use cases.

NOTE: Other RAN design targets in relation to connection density, mobility, security, latency, reliability etc. may be discussed, if necessary for the relevant use cases.

NOTE: Detailed definitions of the RAN design targets should be discussed during the study.
- Compare and assess the feasibility of meeting the design targets for relevant use case on the basis of the deployment scenario(s) appropriate to it, and identify assumptions on required functionality to be supported.

NOTE: This is not to require a detailed WG-level of analysis.

Note: This study shall target for an IoT segment well below the existing 3GPP IoT technologies, e.g., NB-IoT, eMTC, RedCap, etc. The study shall not aim to replace existing 3GPP LPWA technologies.

The IoT devices that 3GPP intends to support through its study have the key feature of being maintenance-free, meaning that they can be permanently used without battery replacement. The document TR 22.840 of 3GPP SA1 study result has captured the content that energy can be harvested from RF signals, and that the RF energy harvesting method can have the following advantages.

The main advantage of RF-based energy harvesting is its availability in deployed environments and the fact that RF power is controllable (e.g., power can be sent by a transmitter on demand or periodically). Potential applications include logistics/warehouse, manufacturing, smart homes, health monitoring, and environmental monitoring etc.

The present disclosure relates to a method and device for supporting a device (hereinafter referred to as EH device) based on RF energy harvesting in a wireless communication system.

In the present disclosure, the wireless communication system may include the meaning of conventional wireless communication systems, such as LTE, NR, etc., and 6G or next-generation communication systems.

In the present disclosure, the EH device may include all of Devices A/B/C that are being considered in 3GPP RAN study, as follows. Therefore, the present disclosure can be applied to all the Devices A/B/C. According to the invention proposal, the EH device is not limited to the Devices A/B/C or device types/classes under consideration in 3GPP, and may be a comprehensive meaning of a general device to which energy is primarily or auxiliary transferred through energy harvesting.

### [Device types/categories/set of devices/classes under study in 3GPP RAN]

(1) Device A: No energy storage, no independent signal generation, i.e., backscattering transmission
(1-1) Complexity comparable to UHF passive RFID
(2) Device B: Has energy storage, no independent signal generation, i.e., backscattering transmission. Use of stored energy can include amplification for reflected signals
(2-1) Complexity to be somewhere between Devices A and C)
(3) Device C: Has energy storage, has independent signal generation, i.e., active RF component for transmission
(3-2) Complexity to be orders-of-magnitude lower than NB-IoT

The present disclosure can be applied to all the following four connection topologies under consideration in the 3GPP RAN study, and may not be limited thereto depending on the invention's proposal.

### [Connection topologies under study in 3GPP RAN]

- Topology (1): BS ↔ Ambient IoT device
   NOTE: Includes the possibility of BS Rx and BS Tx in different BSs
- Topology (2): BS ↔ Intermediate node ↔ Ambient IoT device
   NOTE: Intermediate node can be relay, IAB, UE, repeater, etc. which is capable of ambient IoT.
- Topology (3): BS ↔ Assisting node ↔ Ambient IoT device ↔ BS
   NOTE: Assisting node can be relay, IAB, UE, repeater, etc. which is capable of ambient IoT.
- Topology (4): UE ↔ Ambient IoT device

In the present disclosure, R→T, T→R, and R↔T each include cases where R and T are one R and one T or multiple Rs and Ts. In addition, when there are multiple Rs, it may include both a case where the respective Rs are the same node/entity and a case where the respective Rs are different nodes/entities. Accordingly, proposed methods of the present disclosure can be applied to all possible combinations in which one R or multiple Rs transmit an ES/R→T signal/channel to one T or multiple Ts at the same node/location or different nodes/locations. The case of R↔T may include R1→T→R2 (R1 and R2 are the same node/entity or different nodes/entities. When they are different, it is also called bi-static configuration/set-up).

RF energy transfer method using common/shared signal/channel [Common/shared ES method]

A common/shared ES method may be a method that supports EH by using existing RF signal/channel and/or RF signal/channel for purposes other than energy transfer (ET), not defining/designing a new signal/channel (hereinafter, dedicated ES) for the purpose of energy transfer.

The common/shared ES method may be expected to have the effect of minimizing additional resources when supporting Ambient IoT devices, because it supports the EH operation by reusing signals/channels that already exist or are necessary for other purposes without using resources for separate signal/channel transmission compared to a dedicated ES method. On the other hand, since ES availability may not be guaranteed at an intended time compared to the dedicated ES, R→T, R←T, or R↔T communication may not be guaranteed at a specific time, or, latency may increase even if communication is possible.

An ES transmission resource configuration method for supporting the common/shared ES method may apply a device-specific configuration method, a device-common configuration method, and a hybrid configuration method proposed below.

The common/shared ES method may include a case where existing NR/LTE/next-generation communication system DL/UL signal(s)/channel(s) or a structure of the signal(s)/channel(s) are reused as it is, but are additionally transmitted using separate/dedicated time/frequency resources for the EH. Furthermore, the common/shared ES method may include a case where, for the EH required to perform R→T signal/channel reception operation or T→R signal/channel transmission operation of the T, the ES is additionally transmitted at at a start time of R↔T signal/channel transmission/reception for actual communication or at time prior to the start time.

Two common/shared ES methods are proposed.
(1) Method of using DL/UL signal(s)/channel(s) of existing NR/LTE or next-generation communication system
(2) Method of using DL/UL signal(s)/channel(s) for Ambient IoT communication

### [Method of using DL/UL signal(s)/channel(s) of existing NR/LTE/next-generation communication system]

The Method of using DL/UL signal(s)/channel(s) of existing NR/LTE/next-generation communication system may be claissified into a method of using an existing DL signal/channel and a method of using an UL signal/channel.

### [Method of using DL signal(s)/channel(s) of existing NR/LTE/next-generation communication system]

For example, the DL signal(s)/channel(s) of the existing NR/LTE/next-generation communication system may include the following.
(1) SSB including CD-SSB, NCD-SSB, and the punctured SSB (e.g., PSS, SSS, and punctured 12-PRB SSB) for some narrow dedicated spectrum (e.g., 3 MHz or < 5 MHz spectrum)
(2) Broadcast signals/channels (e.g., for (on-demand) system information, paging, PEI, etc.)
(3) LP-WUS and/or LP-SS, etc.
(3-1) It may be determined whether LP-WUS/LP-SS can be used as an ES based on transmission parameters including LP-WUS/LP-SS waveform, transmission cycle, duty cycle, power, etc. That is, the R may transmit/display LP-WUS/LP-SS transmission information to the EH device, and the EH device may perform an EH operation using LP-WUS/LP-SS only if the transmission information is a specific LP-WUS/LP-SS waveform with reference to the transmission parameter(s) mentioned above, and/or only if values of LP-WUS/LP-SS transmission duty cycle, transmission power, etc. are greater than or equal to a specific value. Further, only if the LP-WUS/LP-SS transmission cycle is less than or equal to a specific value (in addition to the above conditions), the EH device may perform the EH operation using LP-WUS/LP-SS. The R may determine whether LP-WUS/LP-SS can be used as the ES under the same conditions and determine whether to transmit/configure a dedicated ES.
(3-2) In case of a cell that supports both LP-WUS and LP-SS, both the LP-WUS and the LP-SS may be used as the ES based on (some of) the LP-WUS/LP-SS transmission parameters, or only some of LP-WUS/LP-SS may be used as ES. For example, if a transmission cycle of the LP-SS is (X times) less than a transmission cycle of the LP-WUS, only the LP-SS may be used/allowed as the ES. Or conversely, if the transmission cycle of the LP-SS is (Y times) greater than the transmission cycle of the LP-WUS, only the LP-WUS may be used/allowed as the ES.

### [Method of using UL signal(s)/channel(s) of existing NR/LTE/next-generation communication system]

For example, the UL signal(s)/channel(s) of the existing NR/LTE/next-generation communication system may include the following.
(1) UL signal(s)/channel(s) of surrounding UE(s)
(1-1) The UL signal/channel may include PUSCH, PUCCH, SRS, etc. By including dynamically or configured scheduling, or by indicating/configuring to the EH device (part of) CG-PUSCH transmission resource information for CG PUSCH or small data transmission (SDT) configured/indicated to be periodically transmitted, the EH device may be indicated/allowed to perform the EH operation through the corresponding resources. In the same manner, the EH device may be indicated/allowed to perform the EH operation through periodic PUCCH and/or SRS transmission resources.

To support the method, UL transmission information of surrounding UE(s) (e.g., information on time/frequency duration during which the actual ES exists or the T is indicated/allowed to perform the EH operation) may need to be configured/indicated/allowed as R→T. The configuration method may be one of the ES resource configuration/allocation methods proposed below.

### [Method of using DL/UL signal(s)/channel(s) for Ambient IoT communication]

The method of using DL/UL signal(s)/channel(s) for Ambient IoT communication may be claissified into a method of using DL signal(s)/channel(s) and a method of using UL signal(s)/channel(s).

### [Method of using DL signal(s)/channel(s) for Ambient IoT communication]

For example, the DL signal(s)/channel(s) for Ambient IoT communication may include the following.
(1) Signal/channel for transmitting data, commands, etc. from R→T for Ambient IoT devices (hereinafter, R→T signal/channel)
(1-1) Including a case where the R→T signal/channel is transmitted in an unmodulated state for EH purpose. (e.g., unmodulated CW)
(2) In case of a device type/class that performs T→R signal/channel transmission through backscatter modulation, such as Device A/B, CW transmitted by the R/base station from R→T for T→R backscatter modulation

[Example S1] As an example of a method of using DL signal(s)/channel(s) for Ambient IoT communication, for Device A/B, R↔T communication can be performed by applying all or some of steps below.
(1) The R determines resources for R→T signal/channel transmission and/or CW resources for T→R signal/channel transmission (including frequency resources, transmission timing/duration, etc.).
(2) The R may additionally transmit the ES before at least X1 or at time before X1 from a R→T signal/channel transmission start time.
(2-1) The ES may be a unmodulated CW or a modulated CW (R→T signal/channel).
(3) The R may need to additionally transmit the ES before at least X2 or at time before X2 from a T→R signal/channel reception start time (or from a T→R signal/channel transmission start time from a perspective of the T).
(3-1) The ES may be a unmodulated CW (for backscatter modulation) or a modulated CW (R→T signal/channel).
(4) Here, X1 and X2 may be time values in units of ms, symbol(s), (sub-)slot(s), (sub-)frame(s), etc. X1 and X2 may have the same value, or if more energy is required for UL transmission, the value of X2 may be greater than the value of X1. Or, if the energy accumulated during DL reception can be used for UL transmission, the value of X2 may be less than the value of X1.
(5) The Device A/B may perform the EH operation through the ES transmitted before/since a R→T signal/channel reception start time and may receive data/command from the R→T signal/channel reception start time based on the accumulated energy.
(5-1) Additional commands, such as sensor drive, switch on/off, and memory access, may be performed based on a device capability.
(6) The Device A/B may perform the EH operation using the ES transmitted before/since a T→R signal/channel transmission start time and/or R→T signal/channel and may perform T→R signal/channel transmission (based on the command received from the R).
(6-1) For the Device A/B, (immediate or standby/delayed) UL transmission may be performed through backscatter modulation (with the EH) using the CW provided from the R.
(6-2) For the Device B, in addition to the operation of the Device A/B, amplification and large-scale (longer-duration) standby/delayed transmission may be performed using the embedded capacitor/battery.
(7) When the Device A/B performs R→T signal/channel reception and T→R signal/channel transmission by the EH operation, if the time conditions of X1 and X2 are not met, for example, if the time at which the Device A/B is turned on by the EH operation (including the meaning of a predefined turn-on time of the Device A/B) is after the configured/indicated/allowed R→T signal/channel reception start time or T→R signal/channel transmission start time,
(7-1) the R→T signal/channel reception or UL/T→R signal/channel transmission initiated before the turn-on time may be dropped or skipped, respectively.
(7-2) alternatively, only the T→R signal/channel transmission may be skipped, and the R→T signal/channel reception may be performed as partial reception (on a best-effort basis).
(7-3) alternatively, partial transmission (in units of symbol or slot) may be allowed for the T→R signal/channel transmission.
(7-4) alternatively, partial transmission in the T→R signal/channel transmission may be limited to the Device A/B, i.e., the device type/classe based on backscatter modulation.
(7-5) alternatively, partial transmission may be allowed for the T→R signal/channel transmission limited to the Device C.

### [Method of using UL signal(s)/channel(s) for Ambient IoT communication]

For example, the UL signal(s)/channel(s) for Ambient IoT communication may include the following.
(1) T→R signal/channel transmitted by other ambient IoT device(s) to the same or different R as or from the other ambient IoT device(s).
(1-1) The Device A/B may be in the form of (amplified) backscattered or backscatter modulated CW/signal/channel.
(1-2) The Device C may be in the form of (amplified) UL signal/channel generated by itself.

To support this method, UL transmission information of the surrounding Ambient IoT device(s) (e.g., information on time/frequency duration during which the actual ES is transmitted or can be transmitted, or during which the T is configured/indidcated/allowed to perform the EH operation) may need to be configured/indidcated/allowed from R→T. The configuration method may be one of the ES resource configuration/allocation methods proposed below.

### ES transmission method for EH device support

Three main methods are proposed as ES transmission methods for supporting EH devices: FDM ES transmission method, TDM ES transmission method, and TD window ES transmission method. Each proposed method is described below.

Although the FDM/TDM ES transmission methods below mainly illustrate cases where both R→T and T→R exist, by way of example, the proposed methods/schemes of the present disclosure are not limited to cases where all of two links exist unless otherwise stated. That is, the proposed methods/schemes of the present disclosure can be applied to all of a case where both R→T and T→R exist, or a case where only one of the two exists, or some cases, a case where only ES is transmitted.

FIG. 5 illustrates an example of an FDM ES transmission method in an NR licensed FDD band in a system applicable to the present disclosure.

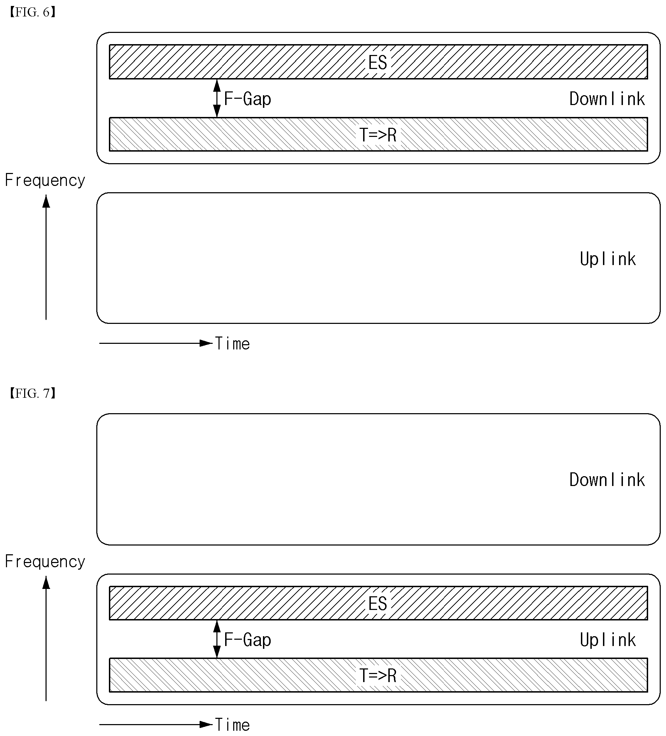

FIG. 6 illustrates an example of an FDM ES transmission method in an NR licensed FDD band in a system applicable to the present disclosure.

FIG. 7 illustrates an example of an FDM ES transmission method in an NR licensed FDD band in a system applicable to the present disclosure.

### [FDM ES transmission method]

The FDM ES transmission method may be a method of transmitting ES in a separate frequency domain distinguished from the R↔T signal/channel. FIGS. 5, 6, and 7 illustrate examples of deploying/configuring/indicating ES frequency band and R↔T frequency band in the FDM ES transmission method in the NR licensed FDD band. FIG. 5 may be an example for Device C that can operate as FDD or HD-FDD in the FDD band because independent signal generation is possible. FIGS. 6 and 7 may be examples for Device A/B that can perform T→R transmission based on backscattering modulation. FIG. 6 may be a case where the ES is transmitted/transferred to the FDD DL to operate EH and backscattering transmission, and in this case, F-gap (see definition below) may be deployed/configured/indicated between the ES frequency band and the T→R frequency band (within the FDD DL frequency band). FIG. 7 may be a case where the ES is transmitted/transferred to the FDD UL to operate EH and backscattering transmission, and in this case, F-gap (see definition below) may be deployed/configured/indicated between the ES frequency band and the T→R frequency band (within the FDD UL frequency band).

In the FDM ES transmission method, a frequency gap (F-gap) may be configured between the ES and the R↔T signal/channel (see the examples of FIGS. 5, 6 and 7). The F-gap may mainly have the purpose of eliminating/mitigating interference that the ES causes to the signal/channel for communication. The interference may be more problematic when ES transmission power is relatively greater than transmission power of the signal/channel for communication. Furthermore, the F-gap may be configured in the following cases:
- between the ES and DL/UL channel/signal of a coexistence system: It can be expected to have the effect of eliminating/mitigating interference that the ES causes to the DL/UL channel/signal of the coexistence system.
- between R↔T signal/channel and DL/UL channel/signal of a coexistence system: It can be expected to have the effect of eliminating/mitigating interference or mutual interference that the R↔T signal/channel causes to the DL/UL channel/signal of the coexistence system.

For each case in which the F-gap can be configured, parameters that determine the presence or absence of the F-gap and size/location, etc. of the F-gap, may be individually configured/indicated, or all or some of the parameters may be commonly configured/indicated. For example, the size (bandwidth) of the F-gap may be configured/indicated as a common parameter, and the presence or absence, the frequency location, etc. of the F-gap may be configured/indicated as individual parameters. Information on the presence or absence/size/location of the F-gap, etc., may be configured/indicated by the R/base station to Ambient IoT devices via device-specific signaling, device-common signaling, or broadcast signaling, etc. The information on the presence or absence/size/location of the F-gap, etc., may be configured/indicated via broadcast signaling (e.g., system information including SIB1), cell-specific/UE-specific RRC signaling, or dynamic (e.g., MAC CE, DCI) signaling, etc. of the corresponding communication system, for example, for rate-matching purposes in an NR system, in order to avoid/control interference/collision when using resources in a coexisting communication system (LTE, NR, or next-generation communication system).

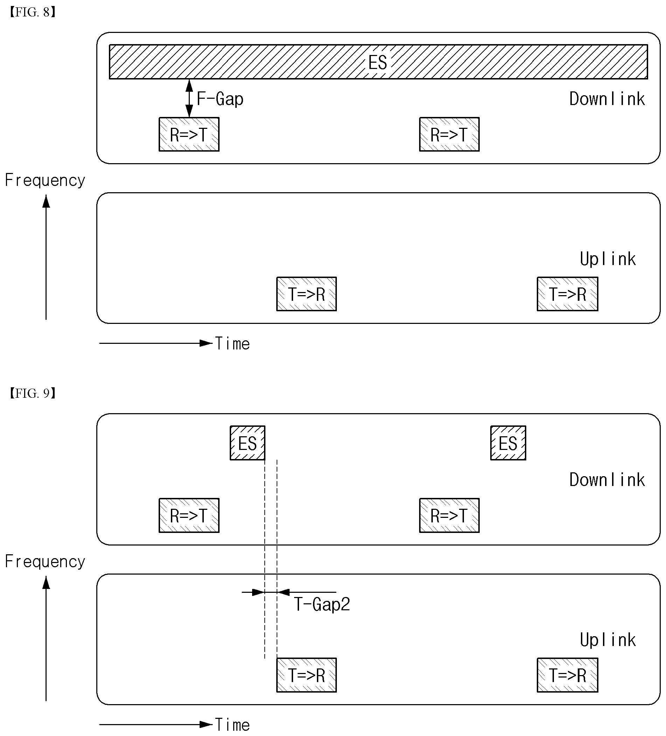

FIG. 8 illustrates an example of an FDM continuous ES transmission method in an NR licensed FDD band in a system applicable to the present disclosure.

### [Time domain transmission method of ES when ES is transmitted in FDM scheme]

There are proposed a continuous/always-on ES transmission method and a discontinuous/on-demand ES transmission method as a time domain transmission method of the ES when the ES is transmitted in the FDM scheme. These methods are described below.

### [Continuous/always-on ES transmission method] Method of transmitting continuously or always ES (regardless of R↔T signal/channel transmission time)

For the FDM continuous ES transmission method, since the EH device always has energy stored, when the EH device communicates with the R, charging time of the EH device is eliminated from a communication delay factor, and thus the effect of minimizing communication latency can be expected. However, there may be a disadvantage of wasting power and resources at the R/base station.

### [Discontinuous/on-demand ES transmission method] Method of transmitting ES discontinuously or only when needed/demanded

The FDM discontinuous ES transmission method can be expected to have the effect of increasing the system efficiency through the R/base station power saving and resource recycling by minimizing unnecessary ES transmission. On the other hand, when the EH device communicates with the R, charging time of the EH device is required, which may increase the overall communication latency.

In the FDM discontinuous ES transmission method, cases where ES transmission is necessary/required may include cases where communication is configured/indicated/requested between the R and the T. In addition, the EH may be required before the start of R↔T signal/channel transmission/reception. In this case, the ES may be transmitted before the start of the R↔T signal/channel transmission/reception (this situation is assumed in examples below). Termination time of the ES may be configured/indicated (per EH device type/class) considering EH requirement(s), ES frequency bandwidth size, etc. defined for the EH device or per EH device type/class. The ES may be periodically transmitted (during a specific time duration) in order to support the EH during the R↔T signal/channel transmission/reception. For ES reception of the EH device, the size of the continuous R↔T signal/channel transmission/reception interval may be limited within a specific time, or the EH may be configured/indicated/allowed to be performed through the ES during a specific time interval (by setting a time gap) at a specific cycle.

The FDM discontinuous ES transmission method can perform the following detailed manners. In examples below, T-Gap1 and T-Gap2 follow the definitions in the TDM ES transmission method below.

FIG. 9 illustrates an example of an FDM discontinuous ES transmission method in an NR licensed FDD band in a system applicable to the present disclosure.

### [Method of transmitting ES when transmitting only T→R signal/channel]

If T is a device type/class that does not require a separate ES during a reception operation and requires EH using the ES only during a transmission operation, an increase effect in the system efficiency through the R/base station power saving and resource recycling can be expected.

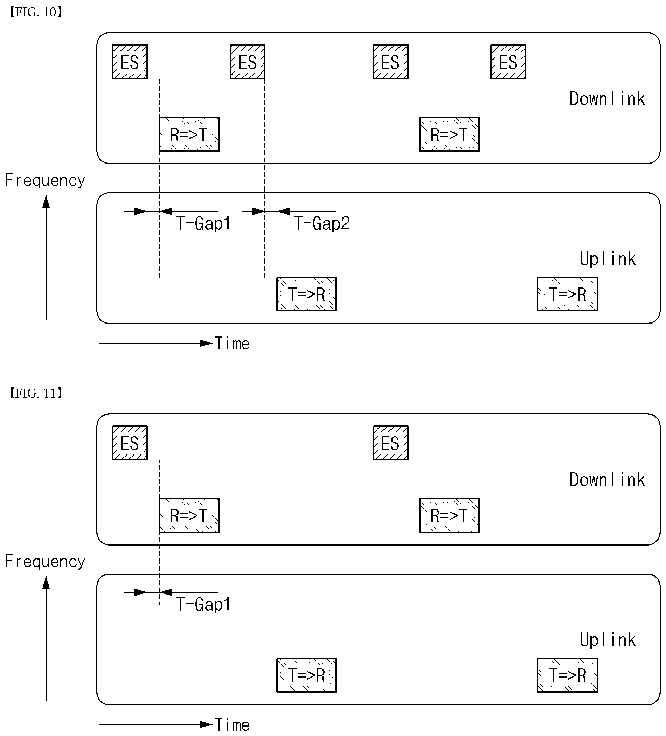

FIG. 10 illustrates an example of an FDM discontinuous ES transmission method in an NR licensed FDD band in a system applicable to the present disclosure.

[Method of transmitting ES when transmitting T→R signal/channel or R→T signal/channel] If T is a device type/class that requires EH using the ES during a reception operation or a transmission operation, an increase effect in the system efficiency through the R/base station power saving and resource recycling can be expected.

FIG. 11 illustrates an example of an FDM discontinuous ES transmission method in an NR licensed FDD band in a system applicable to the present disclosure.

[Method of transmitting ES when transmitting only R→T signal/channel] If T is a device type/class that requires EH using the ES only during a reception operation and does not require the ES during a transmission operation, an increase effect in the system efficiency through the R/base station power saving and resource recycling can be expected.

Exceptionally, there may be cases where the EH using the ES is not required for the reception or transmission operation. In this case, the R/base station may omit the ES transmission, and the T may not expect the ES transmission. These exceptional cases may include:
(1) case where EH can be performed (without ES) through R→T signal/channel during the reception operation (in this case, R→T signal/channel can be transmitted before or from the time of transmitting R→T signal/channel for communication)
(2) case where a separate energy/power source (e.g., a separate battery) is used for (low-noise) amplification of an input signal during the reception operation
(3) case where a separate energy/power source (e.g., a separate battery) is used for amplification, delay transmission, etc. during the transmission operation
(4) case where EH is performed or can be performed using RF energy other than the ES or other energy sources, such as solar, thermal, wind, or kinetic energy, during the reception/transmission operation

### [Application of in-band, guard-band, and standalone band of FDM ES transmission method]

The FDM ES transmission method may be applied when both ES and R↔T signal/channel are deployed/configured/indicated in in-band of a coexistence system.

The FDM ES transmission method may be applied when the R↔T signal/channel is deployed/configured/indicated in the in-band and the ES is deployed/configured/indicated in a guard-band. In this case, the ES deployed/configured/indicated in the guard-band may be shared or common between Ambient IoT devices communicating with (different) Rs in each band through the R↔T signal/channel deployed/configured/indicated in the in-band in each of different frequency bands adjacent to the ES. On the contrary, the FDM ES transmission method may be applied when the R↔T signal/channel is deployed/configured/indicated in the guard-band and the ES is deployed/configured/indicated in the in-band.

The FDM ES transmission method may be applied when both the ES and the R↔T signal/channel are deployed/configured/indicated in the guard-band of the coexistence system. In this case, the ES deployed/configured/indicated in the guard-band may be shared or common between Ambient IoT devices communicating with (different) Rs through the R↔T signal/channel allocated to different frequency/time domain in the guard-band.

The FDM ES transmission method may be applied when both the ES and the R↔T signal/channel are deployed/configured/indicated in a separate band/carrier (Standalone band/carrier deployment).

Information/parameters required to support the FDM ES transmission method including the presence or absence/size/location of the F-gap, T-Gap1, T-Gap2, a time gap for periodically performing EH operation, etc. may be configured/indicated by the R/base station to the Ambient IoT devices via device-specific signaling, device-common signaling, or broadcast signaling, etc. The information on the presence or absence/size/location of the F-gap, etc., may be configured/indicated via broadcast signaling (e.g., system information including SIB1), cell-specific/UE-specific RRC signaling, or dynamic (e.g., MAC CE, DCI) signaling, etc. of the corresponding communication system, for example, for rate-matching purposes in an NR system, in order to avoid/control interference/collision when using resources in a coexisting communication system (LTE, NR, or next-generation communication system).

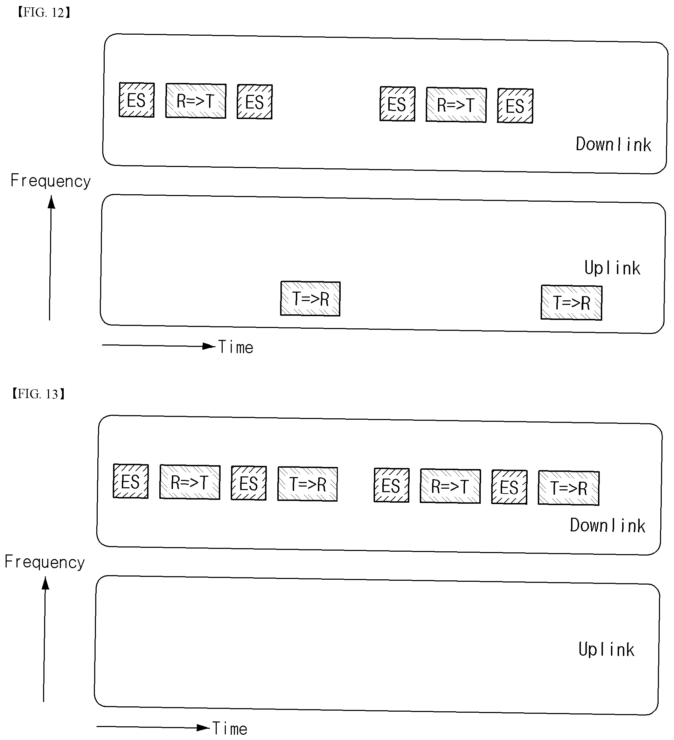

FIG. 12 illustrates an example of a TDM ES transmission method in an NR licensed FDD band in a system applicable to the present disclosure.

FIG. 13 illustrates an example of a TDM ES transmission method in an NR licensed FDD band in a system applicable to the present disclosure.

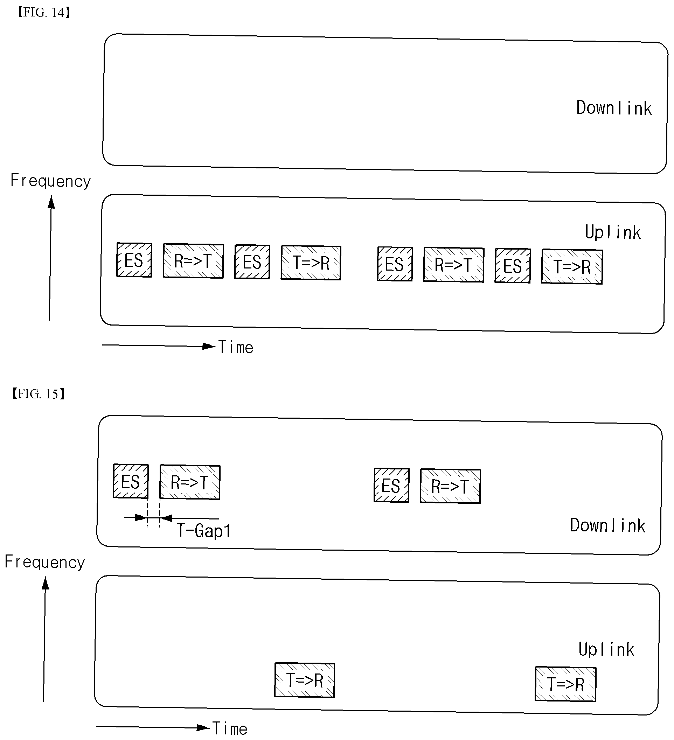

FIG. 14 illustrates an example of a TDM ES transmission method in an NR licensed FDD band in a system applicable to the present disclosure.

### [TDM ES transmission method]

The TDM ES transmission method may be a method of transmitting ES in a time domain distinguished from the R↔T signal/channel. FIGS. 12, 13, and 14 illustrate examples of managing to deploy/configure/indicate the ES and the R↔T signal/channel in the TDM ES transmission method in the NR licensed FDD band. All the examples of FIGS. 12, 13, and 14 illustrate cases where EX transmission is required/provided for R→T transmission and T→R transmission of the EH device, but in some cases, the EX transmission may not be required/provided. FIG. 12 may be an example for Device C that can operate as FDD or HD-FDD in the FDD band because independent signal generation is possible. FIGS. 13 and 14 may be examples for Device A/B that can perform the T→R transmission based on backscattering modulation. FIG. 13 may be a case where the ES is transmitted/transferred to FDD DL to support EH, R→T reception, and T→R backscattering transmission operations. FIG. 14 may be a case where the ES is transmitted/transferred to FDD DL to support EH, R→T reception, and T→R backscattering transmission operations.

FIG. 15 illustrates an example of a TDM ES transmission method in an NR licensed FDD band in a system applicable to the present disclosure.

### [Method of transmitting ES before R→T signal/channel transmission start time]

In the TDM ES transmission method, the ES may need to be transmitted before R→T signal/channel transmission start time. In this case, for the EH for the R→T signal/channel reception operation of the EH device, the R/base station may transmit the ES before the R→T signal/channel transmission start time, and the T may perform the R→T signal/channel reception operation from the time at which the EH is completed using the ES.

The following detailed methods are proposed depending on whether there is a time gap (T-Gap1) between an ES transmission interval and the R→T signal/channel reception start time.

### (1) TDM with time gap

(1-1) The T-Gap1 may be required for transmitter/receiver warm-up, transmitter/receiver state transition, etc., to initiate reception of the R→T signal/channel after the EH through the ES.
(1-2) The T-Gap1 may be required for RF switching of the EH device, and a value of the T-Gap1 may be determined/configured/indicated to include the RF switching time. In this instance, the T-Gap1 may be configured/indicated regardless of frequency locations of the ES and the R→T signal/channel, or may be configured/indicated only if a difference between the two values is greater than or equal to a specific value. The specific value may be determined by RF/baseband bandwidth of the Ambient IoT device. Alternatively, the T-Gap1 may be configured/indicated only when a frequency span including the ES and the R→T signal/channel exceeds the RF/baseband bandwidth of the Ambient IoT device.
(1-3) Through the T-Gap1, an increase effect in the system efficiency through the R/base station power saving and resource recycling can be expected.
(1-4) The EH device may not expect/assume the ES transmission during the requested or configured/indicated T-Gap1.
(1-5) The required T-Gap1 value may differ depending on the Ambient IoT device type/class. For R/base station scheduling or resource recycling, for example, in order to device (type/class)-specifically determine the timing of the ES or the R→T signal/channel transmission, the T may need to report information of the required T-Gap1 to the R/base station. Or, the R/base station may need to collect the required T-Gap1 information from the T (during an initial connection process or after the connection). The required T-Gap1 information may be replaced with device type/class information by the required T-Gap1 value that is fixed per device type/class.

### (2) TDM without time gap

(2-1) When it is difficult to configure/indicate a single value and apply it due to different T-Gap1 requirements per EH device (type/class), or when the R/base station has a difficulty in the resource recycling during the T-Gap1, etc., the TDM ES transmission method may be applied without the time gap.
(2-2) This may be a case when the T-Gap1 value is set to 0.

In the example of FIG. 15, a time gap (T-Gap4) may be required for link direction switching (e.g., DL-to-UL switching) between the T→R signal/channel and the ES. The T-Gap4 value may be determined/configured/indicated to include a link direction switching time. For example, when transmitting the T→R signal/channel in a FDD UL band of LTE/NR/next-generation communication system and transmitting the ES in a FDD DL band, the T-Gap4 value may be determined/configured/indicated to include the link direction switching (e.g., DL-to-UL switching) time. Alternatively, the T-Gap4 setting considering the link direction switching (e.g., DL-to-UL switching) time may be configured/supported/allowed only when the EH device operates in half-duplex in the FDD band. In this case, the EH device operating in half-duplex may not expect the ES reception or the EH during the T-Gap4. The T-Gap4 may be configured/indicated as a separate parameter from the T-Gap2, or (if there is no separate T-Gap4 setting) applied/replaced by the T-Gap2 value.

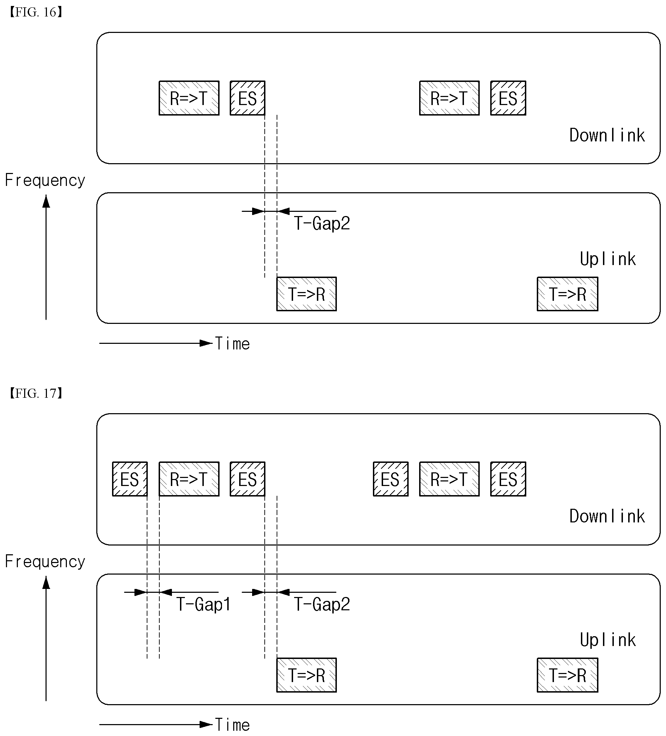

FIG. 16 illustrates an example of a TDM ES transmission method in an NR licensed FDD band in a system applicable to the present disclosure.

### [Method of transmitting ES before T→R signal/channel transmission start time]

In the TDM ES transmission method, the ES may need to be transmitted before T→R signal/channel transmission start time. In this case, for the EH for T→R signal/channel transmission operation of the EH device, the R/base station may transmit the ES before the T→R signal/channel transmission start time, and the T may perform the T→R signal/channel transmission operation from the time at which the EH is completed using the ES.

The following detailed methods are proposed depending on whether there is a time gap (T-Gap2) between an ES transmission interval and the T→R signal/channel transmission start time.

### (1) TDM with time gap

(1-1) The T-Gap2 may be required for transmitter/receiver warm-up, transmitter/receiver state transition, etc., to initiate transmission of the T→R signal/channel after the EH through the ES.
(1-2) The T-Gap2 may be required for RF switching or link direction switching (e.g., DL-to-UL switching) of the EH device, and a value of the T-Gap2 may be determined/configured/indicated to include RF switching time or link direction switching time. For example, when transmitting the ES in a FDD DL band of LTE/NR/next-generation communication system and transmitting the T→R signal/channel in a FDD UL band, the T-Gap2 value may be determined/configured/indicated to include the link direction switching (e.g., DL-to-UL switching) time. Alternatively, the T-Gap2 setting considering the link direction switching (e.g., DL-to-UL switching) time may be configured/supported/allowed only when the EH device operates in half-duplex in the FDD band. In this case, the EH device operating in half-duplex may not expect the ES reception or the EH during the T-Gap2.
(1-3) Through the T-Gap2, an increase effect in the system efficiency through the R/base station power saving and resource recycling can be expected.
(1-4) The EH device may not expect/assume the ES transmission during the requested or configured/indicated/allowed T-Gap2 if the EH device operates in half-duplex.
(1-5) The required T-Gap2 value may differ depending on the Ambient IoT device type/class. For R/base station scheduling or resource recycling, for example, in order to device (type/class)-specifically determine the timing of the ES or the T→R signal/channel transmission, the T may need to report information of the required T-Gap2 to the R/base station. Or, the R/base station may need to collect the required T-Gap2 information from the T (during an initial connection process or after the connection). The required T-Gap2 information may be replaced with device type/class information by the required T-Gap2 value that is fixed per device type/class.

### (2) TDM without time gap

(2-1) For the purpose mentioned above, it may be a case where the T-Gap2 setting is unnecessary. For example, it may include a case where it is difficult to configure a single value due to different T-Gap2 requirements per EH device (type/class), or a case where the R/base station has a difficulty in the resource recycling during the T-Gap2, or the like.
(2-2) When it is difficult to configure/indicate a single value and apply it due to different T-Gap2 requirements per EH device (type/class), or when the R/base station has a difficulty in the resource recycling during the T-Gap2, etc., the TDM ES transmission method may be applied without the time gap.
(2-3) This may be a case when the T-Gap2 value is set to 0.

In the example of FIG. 16, a time gap (T-Gap3) may be required for RF switching between the R→T signal/channel and the ES. The T-Gap3 value may be determined/configured/indicated to include a RF switching time. In this instance, the T-Gap3 may be configured/indicated regardless of frequency locations of the ES and the R→T signal/channel, or may be configured/indicated only if a difference between the two values is greater than or equal to a specific value. The specific value may be determined by RF/baseband bandwidth of the Ambient IoT device. Alternatively, the T-Gap3 may be configured/indicated only when a frequency span including the ES and the R→T signal/channel exceeds the RF/baseband bandwidth of the Ambient IoT device. The T-Gap3 may be configured/indicated as a separate parameter from the T-Gap1, or (if there is no separate T-Gap3 setting) applied/replaced by the T-Gap1 value.

FIG. 17 illustrates an example of a TDM ES transmission method in an NR licensed FDD band in a system applicable to the present disclosure.

### [Method of transmitting ES before R→T signal/channel transmission start time or T→R signal/channel transmission start time]

In the TDM ES transmission method, for the EH for R→T signal/channel reception operation or T→R signal/channel transmission operation of the EH device, the R/base station may transmit the ES before the R→T signal/channel transmission start time or the T→R signal/channel transmission start time, and the T may perform the R→T signal/channel reception operation or the T→R signal/channel transmission operation from the time at which the EH is completed using the ES.

### [Configuration method of time gap parameter(s)]

In the above-described methods, time gap parameters, such as T-Gap1, T-Gap2, T-Gap3, and T-Gap4, may be individually/independently requested/configured/indicated values, or may be interrelated values. In the former case, the time gap parameters may be defined as individual/independent parameters and each may be reported/configured/indicated. In the latter case, for example, some parameter(s) of the time gap parameters may be defined/configured, and remaining parameter(s) may be calculated/inferred from the defined/configured parameter(s).
- After a relationship between the T-Gap1 and the T-Gap2 is defined in the form of, for example, T-Gap2 = X*T-Gap1 or T-Gap1 = Y*T-Gap2, only the T-Gap1 or the T-Gap2 may be configured to determine the T-Gap2 or the T-Gap1, respectively. In this case, values of X and Y values may each be integer values greater than 0. If X or Y is 1, X and Y may be the same value.

Information required to support the TDM ES transmission method including the T-Gap1, the T-Gap2, the T-Gap3, the T-Gap4, etc. may be configured/indicated by the R/base station to the Ambient IoT devices via device-specific signaling, device-common signaling, or broadcast signaling, etc. The information required to support the TDM ES transmission method may be configured/indicated via broadcast signaling (e.g., system information including SIB1), cell-specific/UE-specific RRC signaling, or dynamic (e.g., MAC CE, DCI) signaling, etc. of the corresponding communication system, for example, for rate-matching purposes in an NR system, in order to avoid/control interference/collision when using resources in a coexisting communication system (LTE, NR, or next-generation communication system).

### [TD window ES transmission method] ES transmission method based on Time-Domain window

A TD window ES transmission method may be a method of defining a specific time duration (TD window) from ES transmission start/end time or end time of ES transmission interval/occasion, and omitting ES transmission when (additional) R→T signal/channel transmission or T→R signal/channel transmission occurs within the TD window. The method may be (additionally) applied to the above-described FDM/TDM transmission methods and may be expected to have the effect of saving R/base station ES transmission resources.

To implement the operation, the TD window for ES transmission or transmission omission may be defined and managed. The TD window may be configured/indicated (per EH device type/class) considering the EH requirements of the EH device (type/class). To this end, the EH device may report its own EH device type/class information or EH requirement-related information, or information on directly supported/preferred TD window size, etc. to the R/base station.

In the FDM, TDM, and TD window-based ES transmission methods described above, ES transmission resources may be periodically configured/allocated/indicated (during a specific time duration). Here, the meaning of "periodically" may include the meaning of "periodically repeating a specific pattern." This may be for the purpose of supporting/triggering periodic R↔T communication, or for the purpose of allowing the EH device to periodically perform the EH operation by periodically transmitting the ES, or for the purpose of always maintaining the EH device in a state where R↔T communication is possible (during a specific time duration) based on the period configuration.

In order to support the periodic configuration/allocation/indication, the R/base station may configure/allocate/indicate a cycle (PES) and an ES transmission interval (DES) for each cycle, or an ES transmission pattern (between the cycle and the cycle). For example, if the periodic ES transmission cycle setting is called ES cycle setting, the T may periodically receive the ES based on the ES cycle setting value {PES, DES} and perform EH operation. The R/base station may operate by configuring/allocating/indicating one ES cycle or multiple ES cycles. In this case, each ES cycle may have a different {PEH, DEH} value, which may be for the purpose of supporting different device types/classes and/or various traffics. The traffic may be defined, for example, by cycle, amount, pattern, etc. of data (to be collected).

In addition, in order to support the EH operation through periodic ES reception of the EH device, the size of continuous R↔T signal/channel transmission/reception interval may be limited to a specific time (including the case where the EH operation shall be performed after the specific time), or the EH through the ES may be configured/indicated/allowed to be performed (by configuring a time gap) during a specific time duration at a specific cycle.

### ES resource configuration/allocation method

To configure/allocate ES transmission resources for EH device support, a device-specific ES resource configuration/allocation method and a device-common ES resource configuration/allocation method are proposed. The ES resource configuration/allocation method and/or the ES transmission method may be applicable to all the EH devices, for example, all Devices A/B/C, or may be limited to an EH device that supports operations based on the configuration/allocation or that is capable of independent signal generation, e.g., Device C.

Subsequently, each of proposed methods is described.

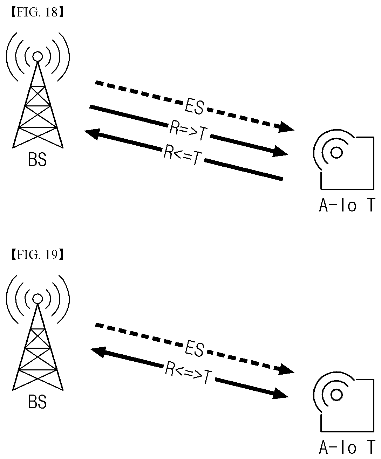

FIG. 18 illustrates an example of a device-specific ES resource configuration method in a system applicable to the present disclosure.

FIG. 19 illustrates an example of a device-specific ES resource configuration method in a system applicable to the present disclosure.

### [Device-specific ES resource configuration method]

In the device-specific ES resource configuration method, DL/UL resources for data communication and separate ES resources may be configured/indicated and managed per device. Although the device-specific is configured, it may include cases where the R/base station manages shared/common ES resources between T/Ambient IoT devices through the same configuration. DL/UL resources for Ambient IoT data communication may be managed by separately configuring DL and UL (example of FIG. 18) or by configuring only one of DL and UL (example of FIG. 19).

### [Example of FIG. 18] Example of Device C (T→R independent signal generation)

- For device type/class, for example, Device C that performs UL transmission by generating a DL channel/signal and a separate UL channel/signal, DL resources and UL resources may be separately configured and managed. Therefore, in this case, considering separate ES transmission resources, {ES, DL, UL} resources may be separately configured and managed per device. The DL may be interpreted/replaced as R→T, and the UL may be interpreted as T→R. (See Terminology above)

### [Example of FIG. 19] Example of Device A/B (T→R backscatter modulation)

- For a device type, for example, Device A/B that performs UL transmission through backscatter modulation, instead of separately configuring DL resources and UL resources, either the DL resources or the UL resources or DL/UL common resources may be configured and managed. In this case, the configured resources may be CW resources for backscattering, which may be interpreted/replaced with R↔T transmission resources as illustrated in FIG. 19. Consequently, in this case, if the ES transmission resources are also taken into account, {ES, DL/UL} or {ES, CW} resources may be separately configured and managed per device.

### [Device-common ES resource configuration method]

In the device-common ES resource configuration method, the R/base station may configure/indicate common/shared resources for ES transmission, and multiple EH devices may perform the EH operation through the ES reception using the configured/indicated common resources. The device-common configuration method may include a cell-specific configuration method and a group-specific configuration method. For example, the R/base station may configure/indicate ES transmission resources in the cell-specific configuration method, thereby allowing all EH devices within cells to perform the EH through the same configured/indicated ES transmission resources.

The cell-specific configuration method may allocate and use specific time/frequency resources as ES transmission resources in the cells that support the EH devices.

Alternatively, the R/base station may configure/indicate the ES transmission resources for each device group or for a specific device group in the device group-specific configuration method, thereby allowing the EH devices to perform the EH operation through the configured/instructed ES transmission resources. In order to configure/indicate the ES transmission resources per EH device in the device group-specific configuration method, each of the EH devices may be allocated a device group ID to which the EH device belongs in advance, and each device group-specific ES resource configuration may include group ID(s) for which the use of the corresponding ES resource is configured/indicated/allowed. If the device group-specific ES resource configuration does not include the device group ID, the use of the ES resource may be configured/indicated/allowed for all the EH devices. For example, in this case, both the group-specific ES resource configuration/indication and the cell-specific ES resource configuration/indication may be supported depending on whether the group ID is included using the device group-specific ES resource configuration method.

Coordination of ES transmission resources between cells/TRPs may be required to support multi-cell/TRP operation. For example, for the purpose of EH, securing SNR of the ES is more important than interference between the cells/TRPs (the interference may be actually helpful). Therefore, in the multi-cell/TRP operation, the multiple cells/TRPs may be allowed to transmit the same ES using the same time/frequency resources. In this case, the device-common configuration method may be a cell-common/TRP-common method rather than the cell-specific/TRP-specific method. That is, instead of configuring/indicating the same time/frequency resources for each cell, the device-common ES configuration may include cell/TRP ID information(s) that transmit the ES using the corresponding resources, together with the common time/frequency resource configuration.

The device group-specific ES resource configuration method may be used for the purpose of configuring/indicating/allowing ES resources used per EH device type/class when multiple EH device types/classes exist in the same cell. For example, it may be used for the purpose of supporting Ambient IoT device types/classes with different EH requirements in the same cell. The EH requirement may be defined as an amount of EH required for the EH device to perform the R→T signal/channel reception operation or the T→R signal/channel transmission operation, or how much time/frequency interval the ES shall be received/accumulated for the operation, etc.
(1) For example, group-specific ES configuration 1 for a device group (type/class) with high EH requirement (i.e., requiring a large amount of EH) and group-specific ES configuration 2 for a device group (type/class) with low EH requirement (i.e., requiring a small amount of EH) may be separately configured and managed. More generally, N device group-specific ES resource configurations may be managed considering N device types/classes requiring different EH requirements.
(1-1) For example, among Device A/B/C, the Device C may belong to a device type/class with high EH requirement, and the Device A may be classified as a device type/class with low EH requirement. The Device B may be classified as the same type/class as the Device A in terms of the EH requirement or may be classified as a type/class, for example, the same type/class as the Device C, with higher EH requirement than the Device A based on a capacitor capacity of the Device B.
(1-2) The R/base station may configure/indicate/allow device group-to-ES resource mapping by considering characteristics of each device type/class in terms of the EH requirement. For example, when two device group-specific ES resource configurations are managed, the configuration 1 may include group 1 consisting of the Devices C, and the configuration 2 may include group 2 consisting of the Devices A/B. Or, in the above example, when N=3, configurations 1, 2, and 3 may be mapped to Device A, B, and C types/classes, respectively.
   In case of supporting multiple EH device types/classes in the same cell, as an alternative to the device group-specific setting, the same ES transmission resources may be configured/indicated/allowed in the cell-specific configuration method, but the ES time/frequency resources used for the EH may be differently configured/indicated/allowed per device type/class.
(2) For example, it may be configured/indicated/allowed for the device type/class with high EH requirement to perform the EH using all the cell-specific ES configuration resources. Further, it may be configured/indicated/allowed for the device type/class with low EH requirement to perform the EH using some of the cell-specific ES configuration resources.
(3) For example, the same frequency location/bandwidth may be configured to all the device types/classes, and it may be indicated/allowed to perform the EH using a different time duration for each device type/class. Alternatively, all the device types/classes may use the same time duration, and it may be configured/indicated/allowed to perform the EH using a different frequency location/bandwidth for each device type/class.
(4) For the above operation, the R/base station may configure ES transmission resources by assuming a specific device type/class when configuring the cell-specific ES resources. For example, the specific device type/class may be the most advanced device type/class or a device type/class with the highest EH requirement among device types/classes within the cell or for which information is to be collected. For example, in case of supporting the Device A/B/C, the cell-specific ES transmission resources may be configured based on (the EH requirement of) the Device C.

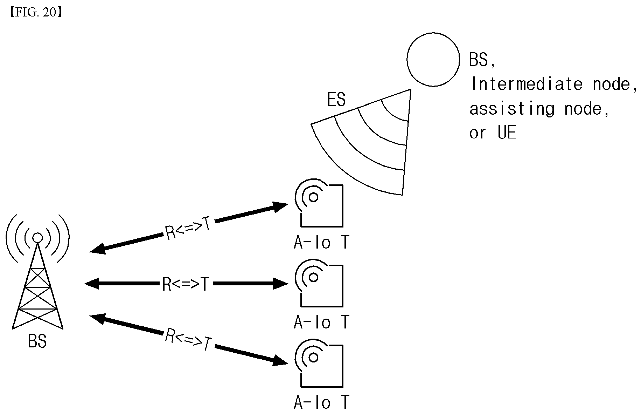

FIG. 20 illustrates an example of a device-common ES resource configuration method in a system applicable to the present disclosure.

### [Example of FIG. 20] Example of Device-common ES resource configuration method

- For a device type, for example, Device A/B that performs UL transmission through backscatter modulation, DL/UL or R↔T resources or CW resources may be configured per device. The ES resources may be cell-specifically or device groupspecifically configured to perform the EH. FIG. 20 illustrates a case where a reader (performing R↔T transmission) and the BS/node/UE transferring the ES are different. However, the example of FIG. 20 may include a case where a left BS and a right BS/node/UE of FIG. 20 are the same BS/node/UE.

### [Hybrid ES resource configuration method]

A hybrid ES resource configuration method may be a method of operating using both device-specific ES resource configuration and device-common ES resource configuration at the same time. In this case, the Ambient IoT device may first check whether the device-specific ES configuration is present, and if the device-specific ES configuration is present, it may perform the EH through the configured/indicated/allowed ES resources in the corresponding configuration. Otherwise, it may perform the EH operation through the configured/indicated/allowed ES resources in the device-common ES configuration.

Alternatively, the Ambient IoT device may perform the EH by using device-common ES configuration resources by default, and may additionally perform the EH by using device-specific ES configuration resources if the device-specific ES configuration resources are present. In this case, the device-specific ES configuration resources may refer to additional EH resources that the R/base station additionally configures in addition to the device-common ES configuration resources, considering the EH requirements of the EH device or to shorten the EH time. In this case, the device-common ES configuration resources may be based on the lightest or the device type/class (e.g., Device A) with lowest EH requirement. For advanced or device types/classes with highest EH requirement (e.g., Device C), both the device-common ES configuration resources and the device-specific (additional) ES configuration resources may be used to perform the EH operations. The device-common ES configuration resources and the device-specific ES configuration resources may be configured/indicated/allowed in FDM/TDM format.

The ES transmitted through the device-common ES configuration and the ES transmitted through the device-specific ES configuration may, taking into account overall ET efficiency, efficient use of resources, impact on coexisting systems, etc.,
(1) configure individually/independently waveform parameters (e.g., different number of tones) individually/independently.
(1-1) they may configure/indicate/allow minimum resources (e.g., single-tone) through the device-common ES configuration and configure/indicate/allow additional resources (e.g., additional tone(s), ultimately the device can perform the EH operation through multi-tone ES through the device-common and device-specific configurations) through the device-specific ES configuration. This method can be expected to have the effect of minimizing resource usage for ES transmission by expanding the resources for ES transmission only when necessary.
(1-2) Alternatively, the multi-tone ES may be configured/indicated/allowed through the device-common ES configuration, and (additional) single-tone/multi-tone ES may be configured/indicated/allowed through the device-specific configuration. This method can also be expected to have the effect of minimizing resource usage for ES transmission by basically configuring/indicating/allowing the multi-tone ES through the device-common ES configuration, and configuring/indicating/allowing additional ES only when there is a device that requires additional EH requirement.
(2) In addition, ES transmission power, ES transmission duty cycle (information on a duration in which the ES is actually transmitted within a cycle), ES transmission periodicity, etc. may be individually/independently configured.
(3) For the individual/independent configurations, ES transmission-related parameters such as ES waveform (e.g., number of tones), transmission power, ES transmission duty cycle, ES periodicity, etc. may be defined and included in the device-common and device-specific ES configurations.

Alternatively, the R/base station may select between the device-specific configuration method and the device-common ES configuration method and may signal the selected configuration method to the EH devices. In this instance, the signaling method may be device-specific signaling, device-common signaling, or broadcast signaling.

All or part of the parameters (e.g., frequency location/bandwidth and transmission duration information) of the ES resource configuration/allocation information and/or the configuration/allocation information for supporting the ES transmission methods for supporting the EH devices may be configured/indicated via broadcast signaling (e.g., system information including SIB1), cell-specific/UE-specific RRC signaling, or dynamic (e.g., MAC CE, DCI) signaling of the corresponding communication system in order to avoid/control interference/collision when using resources in a coexisting communication system (LTE, NR, or next-generation communication system), for example, for rate-matching purposes in an NR system.

Alternatively, all or part of the parameters (e.g., frequency location/bandwidth and transmission duration information) of the ES resource configuration/allocation information and/or the configuration/allocation information for supporting the ES transmission methods for supporting the EH devices may be transmitted/configured/allocated/indicated by a base station to the R, which is the ES transmission entity, when R transmitting the ES is not the base station but an intermediate node, an assisting node, a UE, etc.

### [Description of claims related to first device (Tag/ambient IoT device or user equipment (UE))]

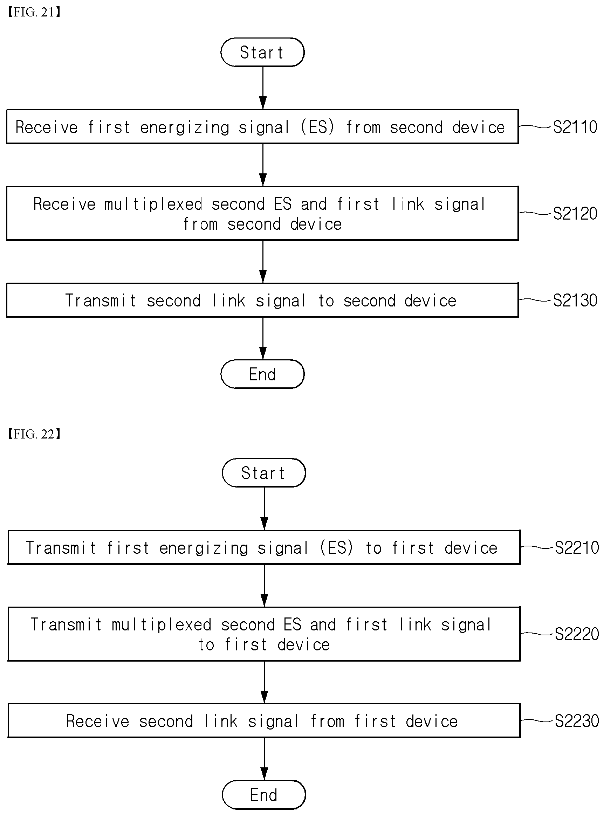

Below, the above-described embodiments are described in detail from an operation perspective of a first device (e.g., tag/ambient IoT device or a user equipment (UE)) with reference to FIG. 21. Methods described below are merely distinguished for convenience of explanation. Thus, as long as the methods are not mutually exclusive, it is obvious that partial configuration of any method can be substituted or combined with partial configuration of another method.

FIG. 21 illustrates an example of an operation process of a first device in a system applicable to the present disclosure.

In step S2110, a first device receives a first energizing signal (ES) from a second device.

In step S2120, the first device receives a multiplexed second ES and a first link signal from the second device.

In step S2130, the first device transmits a second link signal to the second device.

The second ES, the first link signal, and the second link signal are time-multiplexed or frequency-multiplexed. The first ES is an unmodulated carrier wave (CW) for backscatter modulation and energy transfer, and the second ES is a modulated CW or an unmodulated CW. The first ES and the second ES are related to energy transfer to the first device. A reception time of the first ES is earlier than a reception time of the second ES and the first link signal by a time interval of X1. The reception time of the first ES is earlier than a transmission time of the second link signal by a time interval of X2.

According to various embodiments of the present disclosure, if an energy related to the transmission of the second link signal is greater than an energy transferred by the first ES, the X2 may be greater than the X1.

According to various embodiments of the present disclosure, the first link signal may be received based on the energy transferred by the first ES. The second link signal may be transmitted based on the energy transferred by the first ES.

According to various embodiments of the present disclosure, if the X1 and the X2 are greater than a time interval configured between the first device and the second device, a part of the second ES and the first link signal may be received and a rest of the second ES and the first link signal may not be received, or a part of the second link signal may be transmitted and a rest of the second link signal may not be transmitted.

According to various embodiments of the present disclosure, waveforms of the first ES and the second ES may be based on a single tone or a multi-tone.

According to various embodiments of the present disclosure, the second ES, the first link signal, and the second link signal may be time-multiplexed or frequency-multiplexed using a time gap or a frequency gap.

According to various embodiments of the present disclosure, an embodiment of FIG. 21 may further comprise receiving a broadcast signal related to a resource of the first ES or the second ES from the second device.

According to various embodiments of the present disclosure, the broadcast signal may be related to avoiding interference or collision with other devices with respect to the resource of the first ES or the second ES.

According to various embodiments of the present disclosure, there is provided a first device in a wireless communication system. The first device may include a transceiver and at least one processor, and the at least one processor may be configured to perform the operation method of the first device based on FIG. 21.

According to various embodiments of the present disclosure, there is provided a device controlling a first device in a wireless communication system. The device may include at least one processor and at least one memory operably connected to the at least one processor. The at least one memory may be configured to store instructions performing the operation method of the first device based on FIG. 21 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the first device based on FIG. 21.

### [Description of claims related to second device (Reader/interrogator or base station (BS))]

Below, the above-described embodiments are described in detail from a perspective of an operation of a second device (e.g., reader/interrogator or base station (BS)) with reference to FIG. 22. Methods described below are merely distinguished for convenience of explanation. Thus, as long as the methods are not mutually exclusive, it is obvious that partial configuration of any method can be substituted or combined with partial configuration of another method.

FIG. 22 illustrates an example of an operation process of a second device in a system applicable to the present disclosure.

In step S2210, a second device transmits a first energizing signal (ES) to a first device.

In step S2220, the second device transmits a multiplexed second ES and a first link signal to the first device.

In step S2230, the second device receives a second link signal from the first device.

The second ES, the first link signal, and the second link signal are time-multiplexed or frequency-multiplexed. The first ES is an unmodulated carrier wave (CW) for backscatter modulation and energy transfer, and the second ES is a modulated CW or an unmodulated CW. The first ES and the second ES are related to energy transfer to the first device. A transmission time of the first ES is earlier than a transmission time of the second ES and the first link signal by a time interval of X1. The transmission time of the first ES is earlier than a reception time of the second link signal by a time interval of X2.

According to various embodiments of the present disclosure, if an energy related to the reception of the second link signal is greater than an energy transferred by the second ES, the X2 may be greater than the X1.

According to various embodiments of the present disclosure, the reception of the first link signal in the first device may be based on the energy transferred by the first ES. The transmission of the second link signal in the first device may be based on the energy transferred by the second ES.

According to various embodiments of the present disclosure, if the X1 and the X2 are greater than a time interval configured between the first device and the second device, a part of the second ES and the first link signal may be received by the first device and a rest of the second ES and the first link signal may not be received by the first device, or a part of the second link signal may be transmitted by the first device and a rest of the second link signal may not be transmitted by the first device.

According to various embodiments of the present disclosure, waveforms of the first ES and the second ES may be based on a single tone or a multi-tone.

According to various embodiments of the present disclosure, the second ES, the first link signal, and the second link signal may be time-multiplexed or frequency-multiplexed using a time gap or a frequency gap.

According to various embodiments of the present disclosure, an embodiment of FIG. 22 may further comprise transmitting a broadcast signal related to a resource of the second ES.

According to various embodiments of the present disclosure, the broadcast signal may be related to avoiding interference or collision with other devices with respect to the resource of the first ES or the second ES.

According to various embodiments of the present disclosure, there is provided a second device in a wireless communication system. The second device may include a transceiver and at least one processor, and the at least one processor may be configured to perform the operation method of the second device based on FIG. 22.

According to various embodiments of the present disclosure, there is provided a device controlling a second device in a wireless communication system. The device may include at least one processor and at least one memory operably connected to the at least one processor. The at least one memory may be configured to store instructions performing the operation method of the second device based on FIG. 22 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the second device based on FIG. 22.

### Wireless device applicable to the present disclosure

Examples of wireless devices to which various embodiments of the present disclosure are applied are described below.

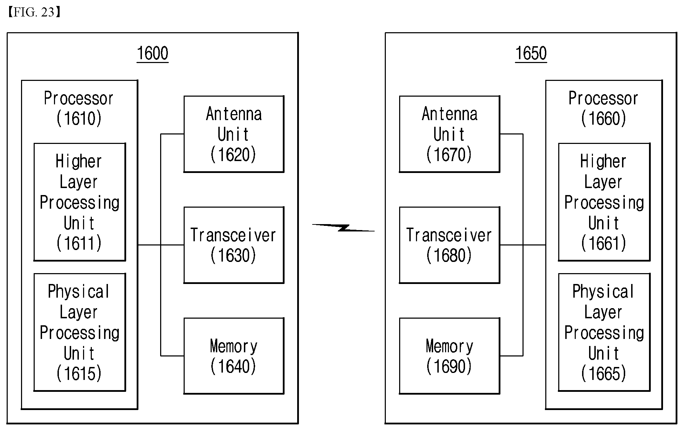

FIG. 23 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink receive (Rx) signal processing, downlink transmit (Tx) signal processing, and the like. For example, if the first device 1600 is a first UE device in inter-UE communication, the physical layer processing unit 1615 may performs downlink Rx signal processing, uplink Tx signal processing, sidelink Tx signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink receive (Rx) signal processing, uplink Tx signal processing, and the like. For example, if the second device 1650 is a second UE device in inter-UE communication, the physical layer processing unit 1665 may perform downlink Rx signal processing, uplink Tx signal processing, sidelink Rx signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Here, the wireless communication technology implemented in the devices 1600 and 1650 according to the present disclosure may include other various wireless communication technologies in addition to LTE, NR, and 6G.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method performed by a first device, the method comprising:
receiving a first energizing signal (ES) from a second device;
receiving a multiplexed second ES and a first link signal from the second device; and
transmitting a second link signal to the second device,
wherein the second ES, the first link signal, and the second link signal are time-multiplexed or frequency-multiplexed,
wherein the first ES is an unmodulated carrier wave (CW) for backscatter modulation and energy transfer, and the second ES is a modulated CW or an unmodulated CW,
wherein the first ES and the second ES are related to an energy transfer to the first device,
wherein a reception time of the first ES is earlier than a reception time of the second ES and the first link signal by a time interval of X1, and
wherein the reception time of the first ES is earlier than a transmission time of the second link signal by a time interval of X2.

2. The method of claim 1, wherein based on an energy related to a transmission of the second link signal being greater than an energy transferred by the first ES, the X2 is greater than the X1.

3. The method of claim 1, wherein the first link signal is received based on an energy transferred by the first ES, and whererin the second link signal is transmitted based on the energy transferred by the first ES.

4. The method of claim 1, wherein based on the X1 and the X2 being greater than a time interval configured between the first device and the second device,
a part of the second ES and the first link signal is received, and a rest of the second ES and the first link signal is not received, or
a part of the second link signal is transmitted, and a rest of the second link signal is not transmitted.

5. The method of claim 1, wherein waveforms of the first ES and the second ES are based on a single tone or a multi-tone.

6. The method of claim 1, wherein the second ES, the first link signal, and the second link signal are time-multiplexed or frequency-multiplexed using a time gap or a frequency gap.

7. The method of claim 1, further comprise receiving a broadcast signal related to a resource of the first ES or the second ES from the second device,
wherein the broadcast signal is related to avoiding interference or collision with other devices with respect to the resource of the first ES or the second ES.

8. A method performed by a second device, the method comprising:
transmitting a first energizing signal (ES) to a first device;
transmitting a multiplexed second ES and a first link signal to the first device; and
receiving a second link signal from the first device,
wherein the second ES, the first link signal, and the second link signal are time-multiplexed or frequency-multiplexed,
wherein the first ES is an unmodulated carrier wave (CW) for backscatter modulation and energy transfer, and the second ES is a modulated CW or an unmodulated CW,
wherein the first ES and the second ES are related to an energy transfer to the first device,
wherein a transmission time of the first ES is earlier than a transmission time of the second ES and the first link signal by a time interval of X1, and
wherein the transmission time of the first ES is earlier than a reception time of the second link signal by a time interval of X2.

9. The method of claim 8, wherein based on an energy related to a reception of the second link signal being greater than an energy transferred by the second ES, the X2 is greater than the X1.

10. The method of claim 8, wherein a reception of the first link signal in the first device is based on an energy transferred by the first ES, and
wherein a transmission of the second link signal in the first device is based on an energy transferred by the second ES.

11. The method of claim 8, wherein based on the X1 and the X2 being greater than a time interval configured between the first device and the second device,
a part of the second ES and the first link signal is received by the first device, and a rest of the second ES and the first link signal is not received by the first device, or
a part of the second link signal is transmitted by the first device, and a rest of the second link signal is not transmitted by the first device.

12. The method of claim 8, wherein waveforms of the first ES and the second ES are based on a single tone or a multi-tone.

13. The method of claim 8, wherein the second ES, the first link signal, and the second link signal are time-multiplexed or frequency-multiplexed using a time gap or a frequency gap.

14. The method of claim 8, further comprise transmitting a broadcast signal related to a resource of the first ES or the second ES,
wherein the broadcast signal is related to avoiding interference or collision with other devices with respect to the resource of the first ES or the second ES.

15. A first device comprising:
a transceiver;
at least one processor; and
at least one memory operably connectable to the at least one processor and storing instructions performing operations based on being executed by the at least one processor,
wherein the operations comprise all steps of a method according to any one of claims 1 to 7.

16. A second device comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a first device, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a second device, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and wherein the operations comprise all steps of a method according to any one of claims 8 to 14.
